# EUROPÄISCHE PATENTSCHRIFT

(11) **EP 2 399 148 B1**
(45) Veröffentlichungstag und Bekanntmachung des Hinweises auf die Patenterteilung: **09.04.2014**
(21) Anmeldenummer: 10706903.1
(22) Anmeldetag: 27.01.2010
(51) Int. Cl.: G01S 7/495

(54) **VERFAHREN ZUM AUGENSICHEREN BETREIBEN EINES GEPULSTEN STÖRLASERS IN EINEM DIRCM-SYSTEM**
METHOD FOR OPERATING A PULSED INTERFERENCE LASER IN AN EYE-SAFE MANNER IN A DIRCM SYSTEM
PROCÉDÉ POUR FAIRE FONCTIONNER SANS DANGER POUR LES YEUX UN LASER DE BROUILLAGE PULSÉ DANS UN SYSTÈME DIRCM

(30) Priorität: 19.02.2009 DE 102009009698
(43) Veröffentlichungstag der Anmeldung: 28.12.2011
(73) Patentinhaber: EADS Deutschland GmbH, 85521 Ottobrunn (DE)
(72) Erfinder: SCHERBARTH, Stefan, 88677 Markdorf (DE)
(74) Vertreter: Meel, Thomas
(86) Internationale Anmeldenummer: PCT/DE2010/000091
(87) Internationale Veröffentlichungsnummer: WO 2010/094254

(56) Entgegenhaltungen:
- WO-A2-2006/077588
- US-A- 5 837 996
- US-A- 6 130 754
- US-A1- 2006 000 987
- US-A1- 2006 238 617
- SCHERBARTH S ET AL: "Eye safe laser based DIRCM systems" PROCEEDINGS OF SPIE - THE INTERNATIONAL SOCIETY FOR OPTICAL ENGINEERING - TECHNOLOGIES FOR OPTICAL COUNTERMEASURES VI 2009 SPIE USA, Bd. 7483, 25. September 2009 (2009-09-25), XP007913202

## Beschreibung

Die Erfindung betrifft ein Verfahren zum augensicheren Betreiben eines gepulsten Störlasers in einem DIRCM-System an Bord eines Luftfahrzeugs

Militärische wie auch zunehmend zivile Luftfahrzeuge sind durch Angriffe von Boden-Luft Lenkflugkörpern (LFK) bedroht. Die am weitesten verbreiteten LFK sind die sogenannten MANPADS (Man portable air defense system) mit im infraroten Spektralbereich arbeitendem Suchkopf.

Eine mögliche Gegenmaßnahme ist das Aussenden gerichteter, mit einer geeigneten Störsequenz modulierten IR-Laserstrahlung gegen den anfliegenden LFK, um dessen Suchkopf zu stören und vom Ziel abzubringen. Solche Systeme werden als DIRCM-Systeme (DIRCM - Direct Infrared Counter Measures) bezeichnet und sind z.B. aus der DE 4402855A1 oder US 6369885B1 bekannt.

Um wirksam zu sein, muss die vom DIRCM-System erzeugte Störstrahlungsintensität deutlich höher sein als die Infrarotabstrahlung des zu schützenden Flugzeuges. Die Verwendung zu geringer Störintensitäten ist kontraproduktiv, da es dem anfliegenden LFK die Zielverfolgung erleichtert.

Zur Erzeugung dieser Störstrahlung wird üblicherweise ein mit hoher Frequenz repetierender, gepulster Laser mit kurzen Einzelpulsdauern benutzt.

Die erforderlichen hohen Laserintensitäten führen zu einem Lasersicherheitsproblem. Der Augensicherheitsbereich eines DIRCM-Systems beträgt zum Beispiel gemäß der europäischen Laserschutzverordnung EN 60825-1 bis zu mehrere hundert Meter. Beim Betrieb des DIRCM-Systems muss daher sichergestellt werden, dass sich keine Personen ohne Laserschutz innerhalb dieser Lasersicherheitsentfernung aufhalten. Dies führt zu Zulassungs- und Nutzungseinschränkungen eines DIRCM-Systems gerade für Situationen wie Start und Landung, bei welchen die potentielle Bedrohung am höchsten, der Schutz durch ein DIRCM-System somit am wichtigsten ist.

Um die Einhaltung des vorgeschriebenen Lasersicherheitsbereichs sicherzustellen, sind Nutzungseinschränkungen unter Zuhilfenahme zusätzlicher Sensorik vorgesehen. So wird zum Beispiel gemäß dem Standard ANSI Z 136.6-2005 Kap. 4.2.7.2 und Kap. 10.5.9 (Laser Institute of America) der Laser ausgeschaltet, wenn die Flughöhe des Luftfahrzeuges niedriger als die NOHD (Nominal Ocular Hazard Distance) bzw. NOHD extended des Lasers ist. Die Flughöhe wird üblicherweise in Luftfahrzeugen durch einen Radarhöhenmesser bestimmt. Dieses Verfahren hat den Nachteil, dass unterhalb einer dem NOHD bzw. dem NOHD extended entsprechenden Höhe kein Schutz des Luftfahrzeugs durch ein DIRCM gegeben ist - gerade dann, wenn die Bedrohung am größten ist.

Bei militärischen Anwendungen und Zulassungen liegt es in der Regel in der Verantwortung des Piloten, die Aktivierung des Lasersystem zu sperren, wenn er nicht ausschließen kann, dass Personen innerhalb des Lasersicherheitsbereichs gefährdet werden können. Diese Vorgehensweise ist jedoch für zivile Anwendungen und Zulassungen nicht akzeptabel. Da viele militärische Luftfahrzeuge mittlerweile auch zivil zugelassen und eingesetzt werden ist diese Vorgehensweise auch für militärische Luftfahrzeuge von großem Nachteil.

Aus dem Bereich der Laserentfernungsmesser wie auch der Laserfreifelddatenübertragung sind spezielle Methoden zur Absicherungen eines nicht augensicheren Laserstrahls bekannt:
In der US 6130754 B1 wird der nicht augensichere Laserstrahl durch einen zusätzlichen augensicheren Mantelstrahl umgeben. Treten Objekte in den Mantelstrahl ein wird dies an Hand der Rückreflexe detektiert und der nicht augensichere Strahl wird abgeschaltet. Diese Verfahren sind prinzipiell auf ein DIRCM-System übertragbar, haben jedoch den Nachteil, dass ein zweiter augensicherer Laserstrahl sowie die entsprechende Optik zur Einhüllung des nicht augensicheren Strahls und zum Empfang der Rückreflexe dieses Mantelstrahls erforderlich ist. Insgesamt ein erheblicher technischer Aufwand.

In der US 5837996 B1 wird vor Freigabe des nicht augensicheren Strahls an Hand des Rückreflexes eines augensicheren "Testlasers" geprüft, ob sich kein Objekt, und damit auch kein Mensch, innerhalb der Laserschutzzone befindet. Diese Verfahren wäre für ein DIRCM-System nur einsetzbar, sofern der Testlaser sich außerhalb des vom Suchkopf des LFK gesehenen Spektralbereiches befindet. Anderenfalls wäre der gemäß der US 5837996 B1 schwächere Testlaser für die DIRCM-Anwendung schädlich, da er den Suchkopf bei der Zielerfassung unterstützt. Der Einsatz eines Testlasers in einem anderen Spektralbereich erfordert jedoch wiederum einen erheblichen technischen Aufwand.

Die US 2006/0000987 A1 beschreibt ein DIRCM-System, bei welchem die Funktionalität des Missilewamers durch einen Suchlaser ersetzt ist. Dieser Suchlaser soll D1 nach dem bekannten Flashprinzip mit Pulszeiten im Bereich von Nanosekunden funktionieren, wobei das reflektierte Signal in einem Detektor-Array empfangen und praktisch gleichzeitig für alle Detektorpixel ausgelesen werden kann. Zur Durchführung dieses Verfahren können augensichere Laser geringer Leistung eingesetzt werden.

In der US 2006/0238617 A1 wird ein Kamerasystem mit Laserbeleuchtung beschrieben, welche zumindest im Nahbereich nicht augensicher ist. Zur Absicherung wird eine Sicherheitseinrichtung eingesetzt, welche bildweise überprüft, ob sich ein Objekt zu nahe im Bild befindet. Falls dies der Fall sein sollte, wird der Laser ausgeschaltet. Als Zeittakt der Überprüfung wird die Standard-Videobildfrequenz von 60 Hz des Kamerasystems verwendet.

Als Kriterium für "zu Nahe" wird eine Helligkeitsschwelle für Bildpixel festgelegt. Mittels eines Bildprozessors ist dann, wenn eine festgelegte Anzahl von Pixeln über dieser Helligkeit liegt, das Kriterium zum Ausschalten des Lasers erfüllt. Zusätzlich kann in einem weiteren Verarbeitungsschritt die Form dieses hellen Gebietes mittel Bildanalyse bestimmt werden, um nur bei einer personenähnlichen Form den Laser zu desaktivieren.

Der Erfindung liegt die Aufgabe zugrunde, ein Verfahren zu schaffen, welches einen augensicheren Betrieb eines DIRCM-Systems ermöglicht, und zwar ohne sich daraus ergebende Nutzungsbeschränkungen des DIRCM-Systems, ohne schädliche Auswirkungen auf seine Funktion und mit möglichst geringem apparativen Aufwand.

Diese Aufgabe wird mit dem Gegenstand des Patentanspruchs 1 gelöst. Vorteilhafte Ausführungen sind Gegenstand von Unteransprüchen.

Das abzusichernde DIRCM-System habe auf Grund seiner Optik und der für die Funktion erforderlichen Intensitäten eine vorgegebene Lasersicherheitsentfernung von einigen hundert Metern (z.B. NOHD extended gemäß der EN 60825-1) bei einer operationell erforderlichen Einsatzdauer des Lasers von mehreren Sekunden. Diese Lasersicherheitsentfernung wird im Folgenden "originäre Lasersicherheitsentfemung" des DIRCM-Systems genannt.

Der Störlaser wird erfindungsgemäß mit einer zusätzlichen Sperrvorrichtung versehen, welche nach einer Zeitspanne Δt die Aussendung der Laserstrahlung unterbinden kann. Diese Sperrvorrichtung kann über die bereits im DIRCM-System vorhanden Modulationseinrichtung des Laserstrahls wirken oder auch unabhängig davon, z. B. als mechanische Strahlblockierung realisiert sein.

Die Zeitspanne Δt wird so bemessen, dass die sich (z.B. gemäß EN 60825-1) aus der in dieser Zeit abgestrahlten Laserenergie ergebende Lasersicherheitsentfernung (im Folgenden "reduzierte Lasersicherheitsentfernung" genannt) einen akzeptabel, geringen Wert annimmt.

Bei einem DIRCM-System ist es nicht möglich, Leistung der Störlaserstrahlung zu reduzieren, da dies zu erheblichen Beeinträchtigung der Funktion führen kann, bis hin zur Umkehrung der Funktion: Statt den anfliegenden LFK abzulenken wird er zum DIRCM System hingeführt. Daher ist der Störlaserstahl auch während der Zeitspanne Δt nicht augensicher. Auf Grund der Kürze von Δt ist jedoch die (z.B. gemäß EN 60825-1) resultierende reduzierte Lasersicherheitsentfernung deutlich kleiner als die originäre Lasersicherheitsentfernung, welche sich im Wesentlichen aus der für die DIRCM-Funktion erforderliche Lasereinsatzdauer von mehreren Sekunden ergibt.

Während der Zeitspanne Δt wird die Rückstreuung der Störlaserpulse zeitlich aufgelöst von einer Empfangsvorrichtung gemessen und gegebenenfalls aus der Laufzeit ermittelt, ob die Entfernung eines sich im Strahl des Störlasers befindliches Objekt geringer ist als die originäre Lasersicherheitsentfernung. Sofern während dieser Zeitspanne Δt keine Objekte innerhalb der originären Lasersicherheitsentfernung detektiert werden, so wird die Emission der Laserstrahlung wiederum lediglich für eine Zeitspanne Δt freigegeben, z.B., in dem der Zeitgeber der Sperrvorrichtung zurückgesetzt wird. Dieser Vorgang wird während der gesamten Einsatzdauer des DIRCM-Lasers wiederholt. Wird jedoch ein Objekt innerhalb der originären Lasersicherheitsentfernung während einer der aufeinanderfolgenden Zeitspannen Δt detektiert, so wird die Emission der Laserstrahlung am Ende der betreffenden Zeitspanne Δt, innerhalb welcher das Objekt detektiert wurde, abgebrochen.

Durch dieses Verfahren ist sichergestellt, dass bei Detektion eines Objektes im Laserstrahl innerhalb der originären Lasersicherheitsentfernung die Laserabstrahlung spätestens nach einer Zeitspanne Δt unterbunden wird. Das Objekt wird somit lediglich für maximal diese Zeitspanne Δt der Laserbestrahlung ausgesetzt. Das gesamte DIRCM-System ist somit mit Ausnahme des Bereichs innerhalb der reduzierten Lasersicherheitsentfernung augensicher. Diese von der Zeitspanne Δt bestimmte reduzierte Lasersicherheitsentfernung kann wesentlich geringer sein als die originäre Lasersicherheitsentfernung des DIRCM-Systems.

Die Größe von originärer und reduzierter Lasersicherheitsentfernung hängen beide von der optischen Auslegung des DIRCM-Systems ab, wobei die die reduzierte Lasersicherheitsentfernung zusätzlich von der Länge der gewählten Zeitspanne Δt abhängt. In einer typischen Auslegung ergeben sich z. B. Werte von originärer Lasersicherheitsentfernung = 200 m, reduzierte Lasersicherheitsentfernung = 10 m und Δt = 0.1 s.

Durch die Einführung der - für eine Entfernungsmessung bis zu einigen hundert Metern - relativ großen Zeitspanne Δt wird erreicht, dass das eventuelle Vorhandensein von Objekten innerhalb der originären Lasersicherheitsentfernung im Laserstrahl mit hoher Zuverlässigkeit und vernachlässigbarer Fehldetektionsrate aus einer Vielzahl von Einzellaserpulsen bestimmt werden kann. Ein fehlerhaftes Ansprechen der Sperrvorrichtung wird somit vermieden.

Der verbleibende geringe Schutzbereich innerhalb der reduzierten Lasersicherheitsentfernung kann, wie bei Luftfahrzeugen z.B. zur Absicherung von Wetterradaren üblich, über einen Weight-on-Wheels (WOW)-Schalter abgesichert werden. Dieser sperrt die Laseremission, sobald das Fahrwerk des Luftfahrzeugs belastet wird, das Luftfahrzeug also am Boden ist. Die Laserausstrahlung ist somit durch den WOW-Schalter lediglich bei einem im Flug befindlichen Luftfahrzeug freigegeben. Auf Grund der geringen Größe der reduzierten Lasersicherheitsentfernung kann daher sicher ausgeschlossen werden, dass sich Personen im Laserschutzbereich befinden.

Eine Desaktivierung des DIRCM-Systems unterhalb einer Mindesthöhe ist somit nicht erforderlich. Das erfindungsgemäß ausgestattete DIRCM-System weist somit keine durch die Lasersicherheit bedingten Nutzungseinschränkungen auf.

Das erfindungsgemäße Verfahren führt auch dazu, dass ein anfliegender LFK die Sperrung der Laseremission auslöst, sofern er näher als die originäre Lasersicherheitsentfernung zum Luftfahrzeug ist. Die Bekämpfung dieses LFK wird somit nach der Zeitspanne Δt, nachdem der LFK die originäre Lasersicherheitsentfernung unterschritten hat, abgebrochen. Da bei den resultierenden kurzen Abständen eine Bekämpfung des LFK mit Infrarot-Störstrahlung praktisch nicht wirksam ist, führt dies jedoch zu keiner relevanten Funktionseinschränkung des erfindungsgemäß gesicherten DIRCM Systems.

Da ohne Ansprechen des Sperrmechanismus keinerlei Änderung der Ausstrahlintensität und der Modulation des Störlasers vorgenommen wird, liegen auch hier keinerlei Funktionseinschränkungen des erfindungsgemäß gesicherten DIRCM-Systems vor.

Die Zeitspanne Δt kann fest vorgegeben werden. In einer alternativen Ausführung wird die Zeitspanne Δt, während der der Laser jeweils freigegeben ist, jedoch fortlaufend aus der Modulation der Störstrahlung so bestimmt, dass ein fest vorgegebener Wert für die reduzierte Lasersicherheitsentfernung innerhalb der Zeitspanne Δt nicht überschritten wird. Hierdurch kann je nach tatsächlicher Modulation (hier ist insbesondere das An/Aus-Verhältnis des Lasers von Bedeutung) des Störlasers eventuell ein höherer Wert für die Zeitspanne Δt verwendet werden, was zu einer Verbesserung der Fehlauslösungsrate des Schutzmechanismus führt.

In einer weiteren vorteilhaften Ausführung wird die originäre Lasersicherheitsentfernung, bis zu der eine Objektdetektion zur Auslösung des Sperrmechanismus führt, nicht fest eingestellt, sondern jeweils aus der bereits vergangenen Emmisionsdauer des Störlaserstrahls innerhalb der letzten 10 Sekunden bestimmt. Gemäß der EN 60825-1 nimmt für ein DIRCM-System die originäre Lasersicherheitsentfernung mit der Bestrahlungsdauer zu, wobei maximal eine Bestrahlung von 10 s zu berücksichtigen ist. Die momentane originäre Lasersicherheitsentfernung ist somit nach z.B. 1 s deutlich kürzer als z.B. nach 5 s Lasereinsatzdauer. Somit genügt es, das Vorhandensein von Objekten innerhalb der jeweils aktuellen Lasersicherheitsentfernung zu überprüfen. Dies führt wiederum zu einer Verbesserung der Fehlauslösungsrate wie auch zu einer kleineren nutzbaren Mindestbekämpfungsentfernung.

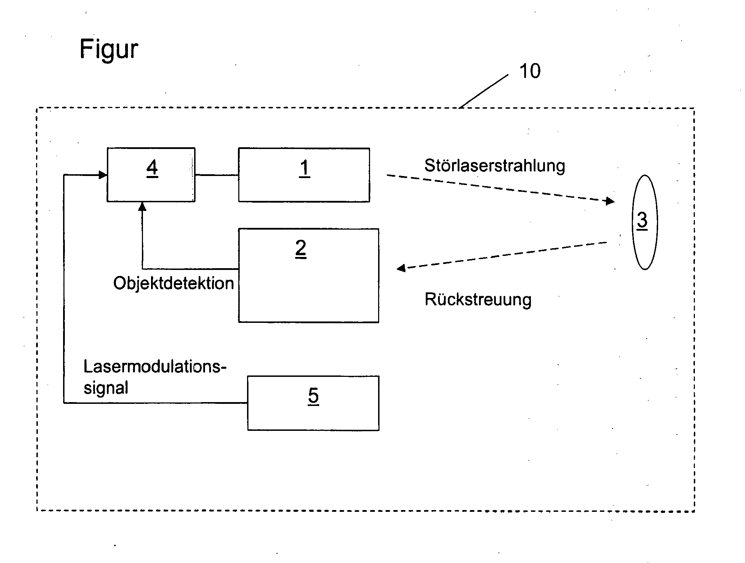

Die Erfindung wird anhand eines Ausführungsbeispiels unter Bezugnahme auf eine Figur näher erläutert. Die Figur zeigt in schematischer Darstellung die für die Durchführung des erfindungsgemäßen Verfahrens relevanten Komponenten eines DIRCM-Systems 10.

Es umfasst den gepulsten Störlaser 1 zur Bekämpfung eines anfliegenden LFK. Eine Empfangseinrichtung 2 empfängt die Rückstreuung der ausgesandten Laserstrahlung und wertet diese aus. Dabei wird die Entfernung des die Rückstreuung verursachenden Objekts 3 gemessen. Die mit dem Störlaser 1 gekoppelte Sperrvorrichtung 4 gibt die Abstrahlung der Laserenergie nur für jeweils eine Zeitspanne Δt frei. Eine Freigabe für die nachfolgende Zeitspanne erfolgt nur dann, wenn die Empfangseinrichtung 2 innerhalb der originären Lasersicherheitsentfernung während der aktuellen Zeitspanne Δt kein Objekt detektiert. Andernfalls wird am Ende der aktuellen Zeitspanne Δt die Aussendung der Laserstrahlung unterdrückt.

Die Sperrvorrichtung 4 wirkt gemäß der in der Figur gezeigten Ausführung, in dem sie auf die Modulationseinrichtung des Laserstrahls einwirkt (DIRCM-Steuerrechner 5). Alternativ kann die Sperrvorrichtung auch als mechanische Strahlblockierung realisiert werden.

## Patentansprüche

1. Verfahren zum augensicheren Betreiben eines gepulsten Störlasers (1) in einem DIRCM-System (10) an Bord eines Luftfahrzeugs, **dadurch gekennzeichnet, dass**
- mittels einer Empfangsvorrichtung (2) Echos der ausgesandten Pulse des Störlasers (1) empfangen und deren Laufzeiten ausgewertet werden, ob sich ein Objekt (3) innerhalb einer vorgegebenen Lasersicherheitsentfernung des DIRCM-Systems (10) im Laserstrahl befindet,
- die Aussendung des Laserstrahls separat für jeweils eine Zeitspanne Δt innerhalb der Einsatzdauer des Störlasers freigegeben wird, wobei die Freigabe für die jeweils nachfolgende Zeitspanne Δt nur erfolgt, sofern innerhalb der jeweils vorhergehenden Zeitspanne Δt kein Objekt innerhalb der Lasersicherheitsentfernung gefunden wurde, wobei die Zeitspanne Δt derart festgelegt wird, dass der Störlaser (1) außerhalb einer reduzierten Lasersicherheitsentfernung, die kleiner ist als die vorgegebene Lasersicherheitsentfernung, augensicher ist.

2. Verfahren nach Anspruch 1, **dadurch gekennzeichnet, dass** die Zeitspanne Δt fortlaufend aus der vom DIRCM-System generierten Modulation des Störlaserstrahles bestimmt wird.

3. Verfahren nach Anspruch 1, **dadurch gekennzeichnet, dass** die Zeitspanne Δt fest vorgegeben ist.

4. Verfahren nach einem der vorangehenden Ansprüche, **dadurch gekennzeichnet, dass** die Ausstrahlung des Lasers unabhängig von dem Vorhandensein eines Objekts innerhalb der Lasersicherheitsentfernung in jedem Fall verhindert wird, sofern der Weight-on-Weels-Schalter des Luftfahrzeugs anzeigt, dass sich das Luftfahrzeug am Boden befindet.

5. Verfahren nach einem der vorangehenden Ansprüche, **dadurch gekennzeichnet, dass** die Lasersicherheitsentfernung fortlaufend aus der Einsatzdauer des Störlasers innerhalb der letzten 10 Sekunden bestimmt wird.

## Claims

1. Method for operating a pulsed interference laser (1) in an eye-safe manner in a DIRCM system (10) onboard an aircraft, **characterized in that**
- a reception apparatus (2) is used to receive echoes from the emitted pulses from the interference laser (1) and to evaluate the delay times of said echoes to determine whether an object (3) is situated within a prescribed laser safety distance for the DIRCM system (10) in the laser beam,
- the emission of the laser beam is enabled separately for a respective period of time Δt within the period of use of the interference laser, wherein the emission is enabled for the respective subsequent period of time Δt only if no object has been found within the laser safety distance within the respective preceding period of time Δt, the period of time Δt being stipulated such that the interference laser (1) is eye-safe outside a reduced laser safety distance that is shorter than the prescribed laser safety distance.

2. Method according to Claim 1, **characterized in that** the period of time Δt is determined continuously from the interference laser beam modulation generated by the DIRCM system.

3. Method according to Claim 1, **characterized in that** the period of time Δt is firmly prescribed.

4. Method according to one of the preceding claims, **characterized in that** the emission of the laser is prevented in all cases regardless of the presence of an object within the laser safety distance if the weight on wheels switch of the aircraft indicates that the aircraft is on the ground.

5. Method according to one of the preceding claims, **characterized in that** the laser safety distance is determined continuously from the period of use of the interference laser within the last 10 seconds.

## Revendications

1. Procédé pour conduire d'une manière protégeant les yeux un laser de brouillage pulsé (1) dans un système DIRCM (10) embarqué à bord d'un aéronef, le procédé étant **caractérisé en ce que**
au moyen d'un dispositif de réception (2), des échos des impulsions émises par le laser de brouillage (1) sont reçus et leurs temps de parcours sont évalués pour vérifier si un objet (3) est présent dans le faisceau laser à l'intérieur d'une distance prédéterminée de sécurité laser du système DIRCM (10) et
**en ce que** l'émission du faisceau laser est libérée séparément pendant une durée Δt au cours de la durée d'utilisation du laser de brouillage, la libération pendant les durées Δt suivantes n'ayant lieu que si au cours de la durée Δt précédente aucun objet n'a été découvert à l'intérieur de la distance de sécurité laser, la durée Δt étant définie de telle sorte que le laser de brouillage (1) fonctionne sans danger pour les yeux à l'extérieur d'une distance de sécurité laser réduite inférieure à la distance de sécurité laser prédéterminée.

2. Procédé selon la revendication 1, **caractérisé en ce que** la durée Δt est définie en permanence à partir de la modulation du faisceau laser de brouillage générée par le système DIRCM.

3. Procédé selon la revendication 1, **caractérisé en ce que** la durée Δt est définie de manière fixe.

4. Procédé selon l'une des revendications précédentes, **caractérisé en ce que** l'émission du faisceau laser indépendamment de la présence d'un objet à l'intérieur de la distance de sécurité laser est empêchée en tout cas si le commutateur indiquant qu'un poids est appliqué sur les roues de l'aéronef indique que l'aéronef est au sol.

5. Procédé selon l'une des revendications précédentes, **caractérisé en ce que** la distance de sécurité laser est définie en permanence au cours des 10 dernières secondes à partir de la durée d'utilisation du laser de brouillage.
